# EUROPÄISCHE PATENTANMELDUNG

(11) **EP 2 485 107 A2**
(43) Veröffentlichungstag der Anmeldung: **08.08.2012**
(21) Anmeldenummer: 12000642.4
(22) Anmeldetag: 02.02.2012
(51) Int. Cl.: G05D 1/00, B64C 39/02

(54) **Unbemanntes Luftfahrzeug mit eingebautem Kollisionswarnsystem**

(30) Priorität: 08.02.2011 DE 102011010679
(71) Anmelder: EADS Deutschland GmbH, 85521 Ottobrunn (DE)
(72) Erfinder: Meyer, Jörg, 84048 Mainburg (DE); Göttken, Matthias, 85413 Hörgertshausen (DE); Vernaleken, Christoph, 36132 Eiterfeld (DE); Schärer, Simon, 81549 München (DE)

(57) **Zusammenfassung**

Die vorliegende Erfindung betrifft ein unbemanntes Luftfahrzeug, ein unbemanntes Luftfahrtsystem und ein Verfahren zur Kollisionsvermeidung beim Fliegen eines unbemannten Luftfahrzeugs. Um eine verbesserte Kollisionsvermeidung zur Verfügung zu stellen, ist ein unbemanntes Luftfahrzeug (10) vorgesehen, das ein Auftriebs- und Vortriebssystem (12) und ein Flugkontrollsystem (22) mit einer Flugkontrolleinheit (24), einem Navigationssystem (26) und einem Aktuatoriksystem (28) aufweist. Die Flugkontrolleinheit weist eine Autopiloteinrichtung (30) auf. Die Flugkontrolleinheit ist vorgesehen, anhand von Daten aus dem Navigationssystem und/oder der Autopiloteinrichtung Steuerkommandos zu berechnen, die dem Aktuatoriksystem zuführbar sind zur Ansteuerung des Auftriebs- und Vortriebssystems. Weiter ist ein Kollisionswamsystem (32) vorgesehen, das mit dem Flugkontrollsystem verbunden ist, wobei das Kollisionswamsystem eine Kollisionssituation erfasst und Kollisionsvermeidungsdaten (34) zur Verfügung stellt. Außerdem ist eine Verbindung (36) zwischen dem Kollisionswamsystem und der Autopiloteinrichtung vorgesehen, um anhand der Kollisionsvermeidungsdaten durch die Autopiloteinrichtung ein Ausweichmanöver zu veranlassen.

## Beschreibung

Die vorliegende Erfindung betrifft ein unbemanntes Luftfahrzeug, ein unbemanntes Luftfahrtsystem und ein Verfahren zur Kollisionsvermeidung beim Fliegen eines unbemannten Luftfahrzeugs.

Unbemannte Luftfahrzeuge erlangen zunehmende Bedeutung sowohl im militärischen Bereich als auch für zivile Anwendungen, beispielsweise für Forschungszwecke. Bei unbemannten Luftfahrzeugen befindet sich an Bord, wie der Name schon sagt, kein Pilot, um das Luftfahrzeug zu fliegen. Vielmehr erfolgt der Flugbetrieb computergesteuert, beispielsweise anhand einer vorgegebenen Route. Außerdem kann eine Verbindung zu einer Leitstation vorgesehen sein, um ein Fernlenken des unbemannten Luftfahrzeugs zu ermöglichen. DE 19849857 C2 beschreibt beispielsweise ein Fernlenkverfahren für ein unbemanntes Luftfahrzeug, bei dem von der Leitstation aus das Luftfahrzeug auf einer Flugbahn abweichend von einer vorprogrammierten Sicherheitsroute ferngelenkt werden kann. Für den Fall, dass eine drohende Kollision vorliegt, kann von einer Leitstation aus durch den jeweiligen Operateur manuell ein Ausweichmanöver durchgeführt werden. Es hat sich jedoch gezeigt, dass das manuelle Ausführen von Ausweichmanövern, beispielsweise durch Eingabefehler, eine Kollision nicht immer verhindern kann.

Es besteht daher ein Bedarf, ein unbemanntes Luftfahrzeug mit einer verbesserten Kollisionsvermeidung zur Verfügung zu stellen.

Dies wird durch ein unbemanntes Luftfahrzeug, ein unbemanntes Luftfahrtsystem sowie ein Verfahren zur Kollisionsvermeidung beim Fliegen eines unbemannten Luftfahrzeugs nach einem der unabhängigen Ansprüche erreicht. Beispielhafte Ausführungsformen sind in den abhängigen Ansprüchen dargestellt.

Gemäß einer beispielhaften Ausführungsform der Erfindung ist ein unbemanntes Luftfahrzeug vorgesehen, das ein Auftriebs- und Vortriebssystem und ein Flugkontrollsystem aufweist. Das Flugkontrollsystem verfügt über eine Flugkontrolleinheit, ein Navigationssystem und ein Aktuatoriksystem. Die Flugkontrolleinheit weist eine Autopiloteinrichtung auf. Die Flugkontrolleinheit ist vorgesehen, anhand von Daten aus dem Navigationssystem und/oder der Autopiloteinrichtung Steuerkommandos zu berechnen, die dem Aktuatoriksystem zuführbar sind zur Ansteuerung des Auftriebs- und Vortriebssystems. Außerdem ist ein Kollisionswarnsystem vorgesehen, das mit dem Flugkontrollsystem verbunden ist, wobei das Kollisionswarnsystem eine Kollisionssituation erfasst und Kollisionsvermeidungsdaten zur Verfügung stellt. Eine Verbindung zwischen dem Kollisionswarnsystem und der Autopiloteinrichtung ist vorgesehen, um anhand der Kollisionsvermeidungsdaten durch die Autopiloteinrichtung ein Ausweichmanöver zu veranlassen.

Gemäß einer beispielhaften Ausführungsform der Erfindung ist eine Datenverbindungseinrichtung vorgesehen zur Verbindung mit einer Kontrollstation zur Führung und Überwachung des Fluges des unbemannten Luftfahrzeugs. Die Datenverbindungseinrichtung ist mit einer Unterbindungsvorrichtung versehen, mit der das Ausführen eines Ausweichmanövers zumindest vorübergehend unterbindbar ist.

Beispielsweise kann die Verbindung zwischen dem Kollisionswarnsystem und der Autopiloteinrichtung vorübergehend blockiert werden. Das Blockieren der Verbindung zwischen dem Kollisionswarnsystem und der Autopiloteinrichtung kann mittels der Kontrollstation ausgelöst werden. Gemäß einem weiteren Beispiel der Erfindung ist das Kollisionswarnsystem mittels der Unterbindungsvorrichtung deaktivierbar.

Der Abbruch des Ausweichmanövers kann auch durch Zuführen eines speziellen Abbruchsignals an den Autopiloten erfolgen, d.h., die Datenverbindung bleibt aufrechterhalten und wird nicht getrennt, sondern vielmehr wird das Abbruchsignal durch die Autopiloteinrichtung übermittelt, wobei dadurch ein Abbruch des vorgesehenen Ausweichmanövers möglich ist.

Es lässt sich daher für das Ausführungsbeispiel des unbemannten Luftfahrzeugs mit der Datenverbindungseinrichtung und der Unterbindungsvorrichtung festhalten, dass es möglich ist, dem unbemannten Luftfahrzeug von außerhalb ein Signal zuzuführen, beispielsweise über die Datenverbindungseinrichtung, wobei diese auch eine bereits anderweitig verwendete Datenverbindungseinrichtung sein kann, um die Autopiloteinrichtung zum Abbruch oder zumindest zu einem vorübergehenden Unterbrechen eines Ausweichmanövers zu bringen.

Für den Fall, dass ein Ausweichmanöver gar nicht eingeleitet ist, bewirkt das Zuführen eines Signals an die Unterbindungsvorrichtung, dass der Autopilot derart aktiviert ist bzw. eingestellt ist, dass bei einer erfassten Kollisionssituation ein Ausweichmanöver unterbleibt. Dies kann beispielsweise erfolgen, indem die Kollisionswameinrichtung bzw. das Kollisionswarnsystem dem Autopilot kein entsprechendes, ein erforderliches Ausweichmanöver repräsentierendes Signal, zur Verfügung stellt. Es ist aber auch möglich, dass das Kollisionswarnsystem die entsprechende Information zur Notwendigkeit eines Ausweichmanövers an den Autopiloten leitet, dort dieses eingetroffene Signal jedoch keinerlei Wirkung hat, d.h., dass eben kein Ausweichmanöver eingeleitet wird, zumindest so lange, bis kein entsprechendes Signal bzw. eine entsprechende Anweisung vorliegt, die das Ausführen eines Ausweichmanövers unterbindet.

In der Luftfahrt lässt sich die Verantwortung für die Vermeidung einer Kollision in zwei Bereiche unterteilen, wozu der Begriff der Verteilung auf mehrere Schalen verwendet werden kann: Eine äußere Schale dient der übergeordneten Separation der Flugzeuge, während eine innere Schale der Kollisionsvermeidung dient, also für die Fälle, die durch die Separationsschale nicht gelöst werden konnten. Die Separation erfolgt in Abhängigkeit vom aktuellen Luftraum und den Flugregeln, nach denen das Flugzeug betrieben wird, durch die Luftfahrtkontrollinstanz (Air Traffic Control, ATC) oder bei einem bemannten Flugzeug durch den Piloten. Die innere Schale wird bei einem bemannten Luftfahrzeug immer durch den Piloten gebildet. Für unbemannte Luftfahrzeuge wird gemäß der Erfindung eine technische Lösung für die innere Kollisionsvermeidungsschale zur Verfügung gestellt.

Gemäß einer beispielhaften Ausführungsform der Erfindung weist das Kollisionswarnsystem mindestens zwei Betriebsmodi auf, wobei die Betriebsmodi automatisch aktivierbar sind.

Gemäß einer beispielhaften Ausführungsform der Erfindung sind die Betriebsmodi anhand von Betriebsparametern des Luftfahrzeugs und/oder anhand von Flugdaten automatisch aktivierbar.

Beispielsweise kann das Ausführen eines Ausweichmanövers bei einem Aktivieren eines festgelegten Betriebsmodus zumindest vorübergehend unterbindbar sein. Gemäß einem weiteren Beispiel können in einem ersten Modus im Falle einer ermittelten Kollisionssituation Kollisionswarnungen und Ausweichempfehlungen erzeugt und ausgegeben werden; in einem zweiten Modus können im Falle einer ermittelten Kollisionssituation nur Kollisionswarnungen erzeugt und ausgegeben werden; in einem dritten Modus können im Falle einer ermittelten Kollisionssituation keine Kollisionswarnungen oder Ausweichempfehlungen ausgegeben werden.

Beispielsweise kann bei Ausfahren des Fahrwerks ein Betriebsmodus aktiviert werden, in welchem Ausweichmanöver unterbunden sind. Beispielsweise können bei Ausfahren des Fahrwerks nur Kollisionswarnungen erzeugt und ausgegeben werden. Gemäß einem weiteren Beispiel der Erfindung kann bei einem Fehler in dem Aktuatoriksystem und/oder dem Auftriebs- und Vortriebssystem, zum Beispiel bei einem Triebwerksfehler ein Betriebsmodus aktiviert werden, in welchem Ausweichmanöver unterbunden sind, oder ein Betriebsmodus, in dem nur Kollisionswarnungen erzeugt und ausgegeben werden.

Gemäß einem weiteren Aspekt der Erfindung umfassen die Kollisionsvermeidungsdaten Anweisungen für ein Ausweichmanöver, die sich auf die Steigrate/Sinkrate des Luftfahrzeugs beziehen. Gemäß einem weiteren Aspekt der Erfindung können die Kollisionsvermeidungsdaten auch Anweisungen umfassen, die sich auf eine Kursänderung des Luftfahrzeugs beziehen. Gemäß einem weiteren Aspekt der Erfindung können die Anweisungen sowohl die Steigrate/Sinkrate als auch die Kursänderung des Luftfahrzeugs betreffen.

Gemäß einer beispielhaften Ausführungsform der Erfindung ist bei Ausfall der Datenverbindung das Kollisionswarnsystem mit der Autopiloteinrichtung automatisch verbindbar, und im Falle einer erfassten Kollisionssituation und erzeugter Kollisionsvermeidungsdaten ist mittels der Autopiloteinrichtung ein Ausweichmanöver automatisch durchführbar.

Dies gewährleistet eine verbesserte Sicherheit beim Betreiben des unbemannten Luftfahrzeugs gemäß der Erfindung, beispielsweise bei einem Datenlinkabriss oder bei Übertragungsverzögerungen.

Die Aufgabe der Erfindung wird auch durch ein unbemanntes Luftfahrtsystem erreicht, welches wenigstens ein unbemanntes Luftfahrzeug, wenigstens eine Kontrollstation und eine Datenverbindung aufweist. Das Luftfahrzeug ist als Luftfahrzeug nach einem der vorhergehend genannten Ausführungsbeispiele, Aspekte bzw. Beispiele ausgebildet. Die Kontrollstation dient zur Führung und Überwachung des Fluges des unbemannten Luftfahrzeugs. Die Datenverbindung ist zwischen der Kontrollstation und dem unbemannten Luftfahrzeug vorgesehen. Die Kontrollstation weist eine Eingabeeinrichtung auf, mit der ein Signal erzeugbar ist, das mittels der Datenverbindung dem unbemannten Luftfahrzeug zuführbar ist, um eine zumindest vorübergehende Unterbindung eines Ausweichmanövers zu bewirken.

Bei dem erfindungsgemäßen Luftfahrtsystem können ein oder mehrere unbemannte Luftfahrzeuge über eine Kontrollstation angesteuert werden. Bei dem erfindungsgemäßen Luftfahrtsystem kann aber auch jeweils eine Kontrollstation für ein unbemanntes Luftfahrzeug vorgesehen sein. Im folgenden wird der Einfachheit halber die Variante mit einer Kontrollstation und einem unbemannten Luftfahrzeug beschrieben, was jedoch auch für die anderen Kombinationsmöglichkeiten gilt, soweit zutreffend.

Beispielsweise kann über die Kontrollstation über die Datenverbindung in das von der Autopiloteinrichtung gesteuerte Ausweichmanöver eingegriffen werden, zum Beispiel steuernd oder regulierend oder auch abbrechend.

Gemäß einer beispielhaften Ausführungsform der Erfindung weist die Kontrollstation eine Mensch/Maschine-Schnittstelle auf, die mit einer Anzeige versehen ist, wobei auf der Anzeige die Kollisionsvermeidungsdaten anzeigbar sind.

Gemäß einer beispielhaften Ausführungsform der Erfindung weisen die Kollisionsvermeidungsdaten Steuerbefehle für das Ausweichmanöver auf, die als Text darstellbar sind.

Die Steuerbefehle können Vorgaben zu einer Steigrate/Sinkrate und/oder Kursänderung aufweisen. Zu den Steuerbefehlen können erlaubte Bereiche angezeigt werden. Die Kollisionsvermeidungsdaten können verschiedene Hinweisstufen und/oder Wamstufen aufweisen, wobei die Hinweisstufen und/oder Wamstufen durch eine grafische Hinterlegung der Steuerbefehle angezeigt werden können. Beispielsweise kann der jeweils aktivierte Betriebsmodus angezeigt werden.

Die Aufgabe der Erfindung wird auch durch ein Verfahren zur Kollisionsvermeidung beim Fliegen eines unbemannten Luftfahrzeugs erreicht, welches die folgenden Schritte umfasst:
a) Erfassen einer Kollisionssituation mit einem Kollisionswarnsystem des unbemannten Luftfahrzeugs;
b) Erzeugen von Kollisionsvermeidungsdaten durch das Kollisionswamsystem;
c) Zuführen der Kollisionsvermeidungsdaten an eine Autopiloteinrichtung des unbemannten Luftfahrzeugs; und
d) Veranlassen eines Ausweichmanövers durch die Autopiloteinrichtung.

Gemäß einer beispielhaften Ausführungsform der Erfindung wird ein Unterbindungssignal einer Unterbindungsvorrichtung zugeführt, und wenigstens ein Ausweichmanöver wird zumindest vorübergehend unterbunden.

Beispielsweise bewirkt das Unterbindungssignal, dass die Verbindung des Kollisionswarnsystems mit der Autopiloteinrichtung temporär unterbrochen bzw. blockiert wird.

Das Unterbrechen der Durchführung eines Ausweichmanövers kann auf verschiedene Art und Weise durchgeführt werden. Beispielsweise kann bei einem über die Datenverbindungseinrichtung eingehenden Signal zur Aktivierung der Unterbindungsvorrichtung das Ausweichmanöver sofort beendet werden und eine Flugrichtung angesteuert werden, die ein sukzessives Zurückführen auf die ursprüngliche Flugbahn bzw. auf eine vorgegebene Flugstrecke bewirkt. Gemäß einem anderen Beispiel kann das Zurückführen auf die ursprünglich vorgesehene Flugbahn auch in einer möglichst kurzen Zeitspanne erfolgen, wobei sich die Zeitspanne an den möglichen Flugmanövern orientiert, bei denen ein Strömungsabriss mit ausreichender Sicherheit vermieden werden kann. Gemäß einem weiteren Beispiel kann das Zurückführen auf die ursprüngliche Flugbahn auch zu einem wesentlich späteren Zeitpunkt erfolgen, um die Flugdauer möglichst wenig zu verlängern. Das Veranlassen des Abbruchs eines Ausweichmanövers kann, wie bereits angedeutet, durch eine Unterbrechung der Datenverbindung bedingt sein, wobei dies durch Abbruch eines Datenstroms bei einer physikalisch aufrechterhaltenen Datenverbindung erfolgen kann oder auch durch eine tatsächlich physikalische Unterbrechung der Datenverbindung, beispielsweise durch eine Unterbrechung einer Kabelverbindung.

Beispielsweise bewirkt das Unterbindungssignal, dass das unbemannte Luftfahrzeug wieder zur vorgegebenen Wegführung und/oder dem Ziel zugeführt wird. Beispielsweise kann das unbemannte Luftfahrzeug wieder zur ursprünglich geplanten Trajektorie zurückgeführt werden.

Gemäß einer beispielhaften Ausführungsform der Erfindung wird das Unterbindungssignal von einer Kontrollstation zur Führung und Überwachung des Fluges des unbemannten Luftfahrzeugs erzeugt und über eine Datenverbindung dem unbemannten Luftfahrzeug zugeführt.

Gemäß einer beispielhaften Ausführungsform der Erfindung wird bei Ausfall der Datenverbindung das Kollisionswarnsystem mit der Autopiloteinrichtung automatisch verbunden, und im Falle einer erfassten Kollisionssituation und erzeugter Kollisionsvermeidungsdaten führt die Autopiloteinrichtung automatisch ein Ausweichmanöver durch.

Gemäß einem weiteren Aspekt der Erfindung gewährleistet das Umschalten auf den Autopiloten bei unterbrochener Verbindung, dass das an Bord befindliche Kollisionswarnsystem eine Sicherheitsnetzaufgabe wahrnimmt ("Safety Net"-Funktion) und bezogen auf den Flugbetrieb des unbemannten Luftfahrzeugs kein routinemäßiges Werkzeug darstellt. Zur Sicherstellung des notwendigen Abstandes zwischen Luftfahrzeugen lässt sich zwar vorausschauend von einer Kontrollstation aus der Flug beeinflussen, jedoch stellen eventuelle Latenzen im Datenlink, d.h. der Verbindung ein Problem dar. Bei einem Abreißen des Datenlinks ist gemäß der Erfindung die Durchführung des Ausweichmanövers sichergestellt, da dies unabhängig von einem manuellen Eingreifen des Operateurs erfolgt. Das automatische Ausweichen ist auch deswegen vorteilhaft, weil das für ein Einleiten des Ausweichmanövers verfügbare Zeitbudget sehr begrenzt ist, was auch damit zusammenhängt, dass unnötige Ausweichmanöver nicht wünschenswert sind.

Beispielsweise weist das unbemannte Luftfahrzeug ein Flugkontrollsystem auf mit einer Flugkontrolleinheit, einem Aktuatoriksystem und einem Navigationssystem. Außerdem kann ein Luftdatensystem vorgesehen sein. Die Flugkontrolleinheit umfasst außerdem die Autopiloteinrichtung. Die Flugkontrolleinheit berechnet anhand von Daten aus dem Navigationssystem und der Autopiloteinrichtung sowie gegebenenfalls aus Daten von dem Luftdatensystem Steuerkommandos, die dem Aktuatoriksystem zugeführt werden zur Ansteuerung des Auftriebs- und Vortriebssystems, um das unbemannte Luftfahrzeug zu fliegen.

Beispielsweise kann die Autopiloteinrichtung das unbemannte Luftfahrzeug bei Abschluss eines Ausweichmanövers sowie auch gegebenenfalls bei einem abgebrochenen Ausweichmanöver wieder zum vorgegebenen Flugpfad, d.h. Wegführung oder Trajektorie, und/oder dem Ziel zuführen.

Es sei darauf hingewiesen, dass die Merkmale der Ausführungsbeispiele, Ausführungsformen sowie Aspekte der Vorrichtungen auch für Ausführungsformen und Aspekte bzw. Beispiele des Verfahrens gelten und umgekehrt. Außerdem können auch diejenigen Merkmale frei miteinander kombiniert werden, bei denen dies nicht explizit erwähnt ist.

Nachfolgend wird anhand der beigefügten Zeichnungen näher auf Ausführungsbeispiele der Erfindung eingegangen. Es zeigen:
- **Fig. 1**: ein unbemanntes Luftfahrzeug gemäß einem ersten Ausführungsbeispiel der Erfindung;
- **Fig. 2**: ein weiteres Ausführungsbeispiel eines unbemannten Luftfahrzeugs gemäß der Erfindung;
- **Fig. 3**: ein unbemanntes Luftfahrtsystem gemäß einem Ausführungsbeispiel der Erfindung;
- **Fig. 4**: eine Eingabeeinrichtung zur Verwendung bei dem unbemannten Luftfahrtsystem, beispielsweise gemäß Fig. 3;
- **Fig. 5**: eine Kontrollstation zur Verwendung bei einem unbemannten Luftfahrtsystem gemäß der Erfindung, beispielsweise gemäß dem in Fig. 3 gezeigten Luftfahrtsystem;
- **Fig. 6**: ein Kollisionswarnsystem gemäß der Erfindung zum Einsatz in einem unbemannten Luftfahrzeug gemäß der Erfindung;
- **Fig. 7**: ein Verfahren zur Kollisionsvermeidung beim Fliegen eines unbemannten Luftfahrzeugs gemäß einem Ausführungsbeispiel der Erfindung;
- **Fig. 8**: ein weiteres Ausführungsbeispiel eines erfindungsgemäßen Verfahrens zur Kollisionsvermeidung beim Fliegen eines unbemannten Luftfahrzeugs;
- **Fig. 9**: einen weiteren Aspekt eines Ausführungsbeispiels für ein Verfahren zur Kollisionsvermeidung beim Fliegen eines unbemannten Luftfahrzeugs gemäß der Erfindung;
- **Fig. 10**: einen weiteren Aspekt eines erfindungsgemäßen Verfahrens zur Kollisionsvermeidung beim Fliegen eines unbemannten Luftfahrzeugs;
- **Fig. 11**: eine schematische Übersicht über ein erfindungsgemäßes System und Verfahren zur Kollisionsvermeidung beim Fliegen eines unbemannten Luftfahrzeugs;
- **Fig. 12**: ein weiteres Ausführungsbeispiel einer Kontrollstation gemäß der Erfindung zum Einsatz in einem erfindungsgemäßen unbemannten Luftfahrtsystem;
- **Fig. 13**: einen weiteren Aspekt der in Fig. 12 gezeigten Kontrollstation;
- **Fig. 14**: einen weiteren Aspekt der in Fig. 12 und 13 gezeigten Kontrollstation; und
- **Fig. 15**: einen weiteren Aspekt einer erfindungsgemäßen Kontrollstation.

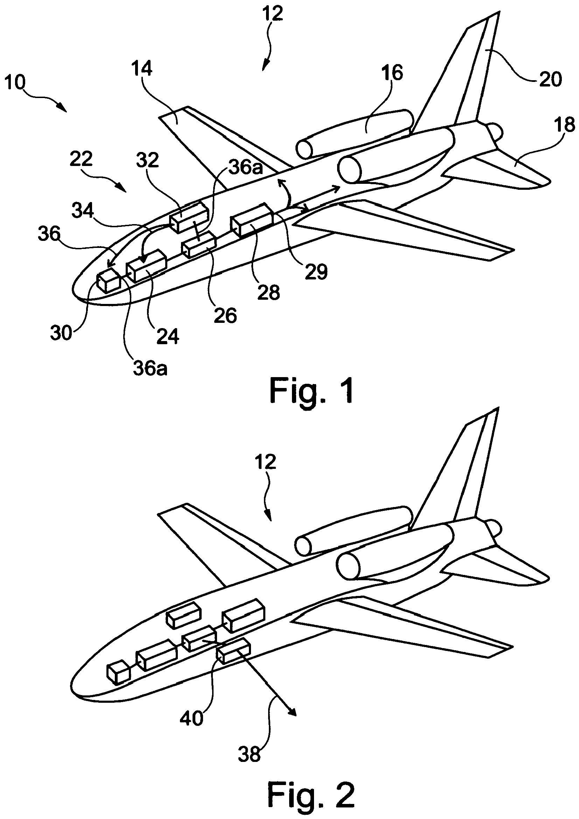

In Fig. 1 ist ein unbemanntes Luftfahrzeug 10 gemäß einem ersten Ausführungsbeispiel der Erfindung gezeigt. Das Luftfahrzeug 10 weist ein Auftriebs- und Vortriebssystem 12 auf. Beispielsweise ist eine Tragflächenstruktur 14 in Form zweier seitlicher Flügel als wesentliches Merkmal des Auftriebssystems gezeigt. Weiter sind zwei Turbinentriebwerke 16 gezeigt, die für den nötigen Vortrieb vorgesehen sind; außerdem ist im hinteren Bereich ein Höhenleitwerk 18 sowie ein Seitenleitwerk 20 dargestellt. Das Luftfahrzeug 10 kann beispielsweise eine flugzeugähnliche Rumpfkonstruktion aufweisen, die jedoch nicht mit Bezugszeichen versehen ist.

Es sei an dieser Stelle darauf hingewiesen, dass das unbemannte Luftfahrzeug 10 gemäß den gezeigten Ausführungsbeispielen ein unbemanntes Flugzeug ist. Die Erfindung bezieht sich jedoch ebenfalls auf andere Arten von Luftfahrzeugen, zu denen neben Flugzeugen auch insbesondere Hubschrauber oder andere sogenannte Drehflügler gehören. Die Erfindung betrifft außerdem auch Luftfahrtschiffe, bei denen der Auftrieb nicht durch Flügelkonstruktionen, zumindest nicht der wesentliche Anteil, sondern durch einen Auftriebskörper bewirkt wird. Hinsichtlich der Vortriebsmöglichkeiten ist in den Figuren ein Turbinentriebwerk bzw. ein Turbinentriebwerkspaar beispielhaft gezeigt, wobei ausdrücklich darauf hingewiesen sei, dass selbstverständlich auch andere Vortriebsmöglichkeiten verwendet werden können, insbesondere Propellerantriebe sowie unterschiedliche Kombinationen sowie unterschiedliche Anzahl der verwendeten Einheiten. Ebenfalls kommen andere Flugzeugstrukturen in Frage, wie beispielsweise sogenannte Nurflügler, bei denen keine separate Rumpfkonstruktion vorgesehen ist, sowie Flugzeuge mit einer Vielzahl an Flügelelementen oder auch anderen Antriebssystemen, wie beispielsweise Flettner-Rotoren und deren Weiterentwicklungen.

Wesentlich für die erfindungsgemäßen unbemannten Luftfahrzeuge und deren unterschiedliche Ausführungsformen ist, dass das Luftfahrzeug 10 über Vorrichtungen verfügt, die dafür sorgen, dass das Luftfahrzeug in der Luft fliegen kann und in seiner Flugrichtung steuerbar ist. Der Begriff Flugrichtung umfasst sowohl Richtungsänderungen in der Vertikalen, d.h. Steig- und Sinkrate, als auch Richtungsänderungen in der Horizontalen, d.h. Kursänderungen. Der Begriff des Flugs soll auch gelten für das Fortbewegen, beispielsweise eines Ballons, was üblicherweise mit dem Begriff "Fahren" in Verbindung gebracht wird. Die Erfindung ist demnach auch für derartige Ballonkonstruktionen anwendbar, bei denen entsprechende regelbare Vortriebskomponenten vorgesehen sind, und bei denen auch Regelmöglichkeiten für den Auftrieb vorgesehen sind, um die beschriebene Steuerbarkeit zu gewährleisten.

Zurück zu Fig. 1, weist das unbemannte Luftfahrzeug 10 außerdem ein Flugkontrollsystem 22 auf. Dieses Flugkontrollsystem 22 verfügt über eine Flugkontrolleinheit 24, ein Navigationssystem 26 sowie in Aktuatoriksystem 28. Die genannten Merkmale sind schematisch mit einem Kasten bzw. Box dargestellt, wobei ausdrücklich darauf hingewiesen sei, dass das Navigationssystem 26 sowie die Flugkontrolleinheit 24 auch integriert ausgebildet sein können. Außerdem ist das Aktuatoriksystem 28 schematisch gezeigt und umfasst nicht dargestellte Stellglieder bzw. Aktuatoren sowie Steuerleitungen bzw. Signalleitungen. Jedenfalls ist das Aktuatoriksystem dafür verantwortlich, dass sich das unbemannte Luftfahrzeug 10 mittels des Auftriebs- und Vortriebssystems 12 steuern lässt. Dementsprechend umfasst das Aktuatoriksystem auch eine Verbindung zu den Triebwerken 16 neben Verbindungen zu nicht weiter gezeigten Flügelklappen oder sonstigen Stellelementen an den Flügeln 14 sowie zu dem Höhenruder 18 bzw. Höhenleitwerk sowie dem Seitenleitwerk 20 etc. Die Aktivierung der genannten Steuerelemente ist symbolhaft mit einer Pfeilstruktur 29 abgebildet. Das Aktuatoriksystem fährt beispielsweise die Steuerflächen in die kommandierte Position.

Die Flugkontrolleinheit 24 weist außerdem eine Autopiloteinrichtung 30 auf. Die Flugkontrolleinheit 24 ist vorgesehen, anhand von Daten aus dem Navigationssystem 26 und/oder der Autopiloteinrichtung 30 Steuerkommandos zu berechnen, die dem Aktuatoriksystem zuführbar sind zur Ansteuerung des Auftriebs- und Vortriebssystems 12. Die Verbindungen bzw. die Datenverbindungen zwischen der Flugkontrolleinheit 24, dem Navigationssystem 26 und dem Aktuatoriksystem 28 sowie die Zurverfügungstellung von Daten und Steuerkommandos aus der Autopiloteinrichtung 30 sind symbolhaft mit einer Verbindung zwischen den einzelnen Kästen schematisch in Fig. 1 dargestellt. Selbstverständlich kann diese Verbindung beispielsweise über ein Bussystem oder über eine sonstige Verbindung, beispielweise über eine zentrale Steuereinheit, ausgeführt sein.

Erfindungsgemäß ist außerdem ein Kollisionswarnsystem 32 vorgesehen, das mit dem Flugkontrollsystem 22 verbunden ist, was jedoch nicht näher dargestellt ist. Das Kollisionswarnsystem 32 erfasst eine Kollisionssituation und stellt Kollisionsvermeidungsdaten zur Verfügung, was mit einem Pfeil 34 angedeutet ist.

Außerdem ist eine Verbindung 36 zwischen dem Kollisionswarnsystem 32 und der Autopiloteinrichtung 30 vorgesehen, um anhand der Kollisionsvermeidungsdaten durch die Autopiloteinrichtung 30 ein Ausweichmanöver zu veranlassen. Die Verbindung 36 ist schematisch gezeigt und kann selbstverständlich auch indirekt erfolgen, beispielsweise über eine Verbindung des Kollisionswarnsystems 32 mit der Flugkontrolleinheit 24, was durch Bezugszeichen 36a schematisch angedeutet ist. Außerdem kann vorgesehen sein, dass das Flugkontrollsystem 22 ein Luftdatensystem aufweist, was jedoch nicht näher gezeigt ist, das Daten an die Flugkontrolleinheit übermittelt, um die Steuerkommandos zu berechnen.

Wenn beispielsweise ein Bussystem zur Verbindung des Kollisionswarnsystems mit der Flugkontrolleinheit, auch Flugkontrollcomputer genannt, vorgesehen ist, können entsprechende Botschaften auf diesem Bussystem transportiert werden, mit denen das Kollisionswarnsystem dem Flugkontrollcomputer seinen aktuellen Status mitteilt. Diese können ein erkannter Konflikt mit einem anderen Luftfahrzeug, die Abwesenheit von Konflikten, aber auch die Information, dass ein Konflikt erfolgreich aufgelöst wurde, oder auch Statusinformationen des Kollisionswarnsystems selbst sein. Gemäß einem weiteren Aspekt der Erfindung kann das Kollisionswarnsystem mit dem Flugkontrollsystem als Übereinheit verbunden sein. Gemäß einem weiteren Aspekt der Erfindung kann das Kollisionswarnsystem mit dem Flugkontrollsystem als Übereinheit verbunden sein.

Das Kollisionswarnsystem kann beispielsweise als TCAS-System ausgeführt werden. Bei dem TCAS-System korrespondiert das Kollisionswarnsystem des unbemannten Luftfahrzeugs mit Transpondern von anderen Flugzeugen im Luftraum und ermittelt aus den übertragenen Daten die es umgebende Verkehrssituation, um daraus eine mögliche Kollisionssituation zu bestimmen. Die von einem TCAS-System eines Luftfahrzeugs zyklisch berechneten Parameter in Relation zu anderen Luftfahrzeugen, wie Entfernung, Richtung, Annäherungsgeschwindigkeit, Flughöhe und Steig- bzw. Sinkrate, ermöglichen dem System die Voraussage einer Kollisionsgefahr.

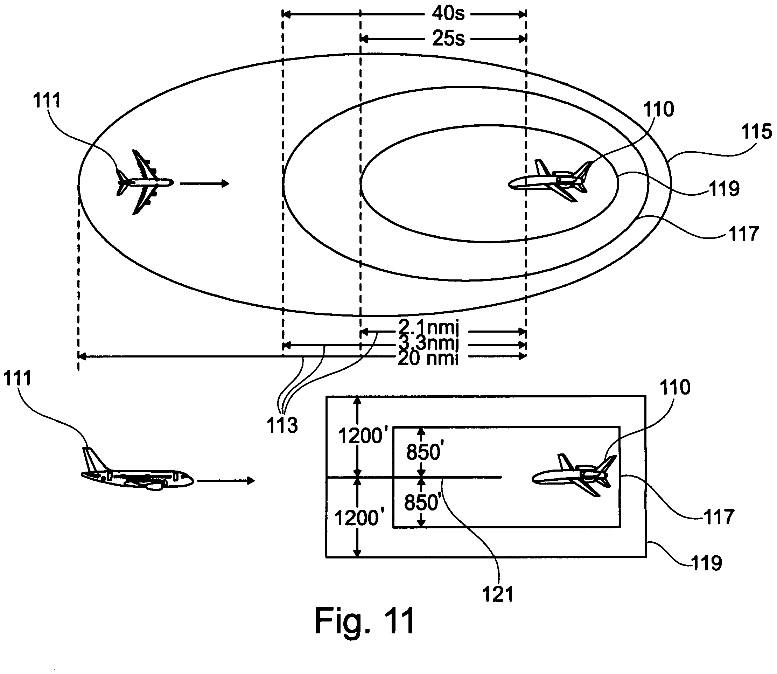

Auf Basis dieser Parameter bestimmt TCAS die dichteste Annäherung CPA (Closest Point of Approach) und die Zeitdauer (TAU), die benötigt wird, diesen Ort im Luftraum zu erreichen. Dies wird anhand von Fig. 11 näher erläutert.

Gemäß einem weiteren Ausführungsbeispiel, in Fig. 2 gezeigt, ist eine Datenverbindungseinrichtung 38 vorgesehen, die in Fig. 2 schematisch angedeutet ist und der Verbindung mit einer Kontrollstation, nicht gezeigt, zur Führung und Überwachung des Fluges des unbemannten Luftfahrzeugs dient. Die Datenverbindungseinrichtung 38 ist mit einer Unterbindungsvorrichtung 40, ebenfalls an Bord des unbemannten Luftfahrzeugs 12, versehen, wobei mit der Unterbindungsvorrichtung 40 das Ausführen eines Ausweichmanövers zumindest vorübergehend unterbindbar ist.

Beispielsweise kann das Durchführen eines Ausweichmanövers unterbrochen oder abgebrochen werden. Gemäß einem weiteren Beispiel kann die Verbindung zwischen dem Kollisionswarnsystem und der Autopiloteinrichtung, zumindest der Datentransfer, vorübergehend blockiert werden. Das Blockieren der Verbindung zwischen dem Kollisionswarnsystem und der Autopiloteinrichtung ist beispielsweise mittels der Kontrollstation (nicht gezeigt) auslösbar. Beispielsweise ist das Kollisionswarnsystem 32 mittels der Unterbindungsvorrichtung 40 deaktivierbar.

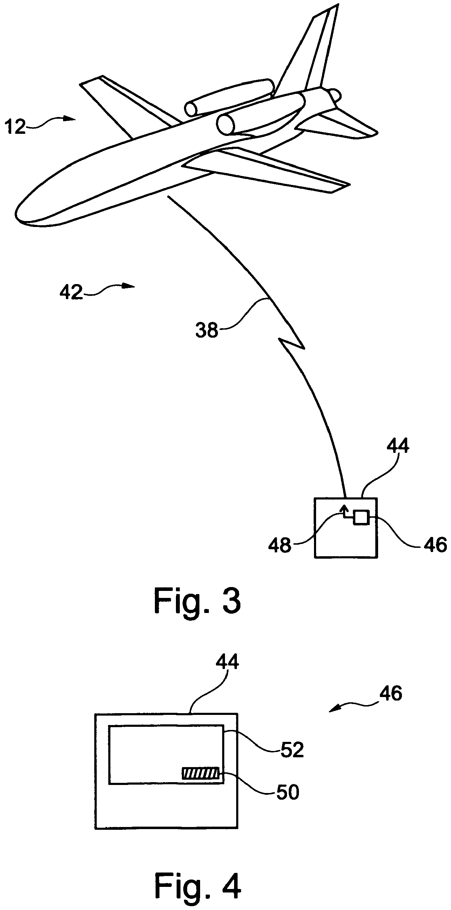

Gemäß der Erfindung ist auch ein unbemanntes Luftfahrtsystem vorgesehen, das in Fig. 3 in einem ersten Ausführungsbeispiel gezeigt ist. Das unbemannte Luftfahrtsystem 42 weist wenigstens ein unbemanntes Luftfahrzeug 12 nach einem der vorhergehenden Ausführungsbeispiele und Aspekte auf. Außerdem ist wenigstens eine Kontrollstation 44 zur Führung und Überwachung des Fluges des unbemannten Luftfahrzeugs 12 vorgesehen, sowie eine Datenverbindung 38 zwischen der Kontrollstation und dem unbemannten Luftfahrzeug. Die Kontrollstation 44 weist eine Eingabeeinrichtung 46 auf, mit der ein Signal erzeugbar ist, das mittels der Datenverbindung 38 dem unbemannten Luftfahrzeug 12 zuführbar ist, um eine zumindest vorübergehende Unterbindung des Ausführens eines Ausweichmanövers zu bewirken. Das Signal ist schematisch mit einem Pfeil 48 dargestellt.

Über die Datenverbindung 38 kann beispielsweise ein Operateur bei der Kontrollstation 44, beispielsweise einer Bodenstation, über den Status des Kollisionswarnsystems, beispielsweise eines TCAS-Systems informiert werden und hat über die Datenverbindung die Möglichkeit, durch ein definiertes Kommando, welches vom Operateur in der Bodenkontrollstation definiert und via Datenlink zum On-Board-System des unbemannten Luftfahrzeugs gesendet wird, auf die Ausführung des Ausweichmanövers, veranlasst durch die Kollisionswarneinrichtung an Bord des unbemannten Luftfahrzeugs, Einfluss zu nehmen.

Die grundsätzlich vorgesehene automatische Aktivierung des Kollisionswarnsystems und der Ausweichempfehlung, die im Autopiloten in entsprechende Steuerbefehle umgesetzt wird, führen zu einer Erhöhung der Sicherheit bei unbemannten Luftfahrzeugen. Mittels der oberhalb beschriebenen Unterbindung bzw. des Abbruchs eines Ausweichmanövers kann der Operateur durch beispielsweise das oben definierte Kommando die automatische Ausführung deaktivieren. Beispielsweise ist die Eingabeeinrichtung 46 eine aktivierbare Fläche 50 auf einer visuellen Anzeigevorrichtung 52, was in Fig. 4 schematisch gezeigt ist. Beispielsweise kann die aktivierbare Fläche 50 durch Bewegen eines nicht weiter gezeigten Cursors und eines Mausklicks ausgeführt werden. Außerdem ist es möglich, die aktivierbare Fläche 50 als berührungsempfindliche Fläche auf einem Bildschirm auszubilden, beispielsweise auf einem Touchscreen.

Gemäß der Erfindung ist vorgesehen, ein unbemanntes Luftfahrtsystem 42 zur Verfügung zu stellen, bei dem die Kontrollstation 44 über die Datenverbindung 38 in das von der Autopiloteinrichtung gesteuerte Ausweichmanöver eingreifen kann, zum Beispiel steuernd oder regulierend, oder ein Ausweichmanöver unterbinden kann.

Gemäß einem weiteren Aspekt der Erfindung kann das Ergebnis des Kollisionswarnsystems, d.h. die Kollisionsvermeidungsdaten bzw. die Information über eine Kollisionssituation, an die Kontrollstation, beispielsweise eine Bodenkontrollstation, übermittelt werden und dort auf der Anzeige dargestellt werden, beispielsweise als Symbole oder als Textinformation.

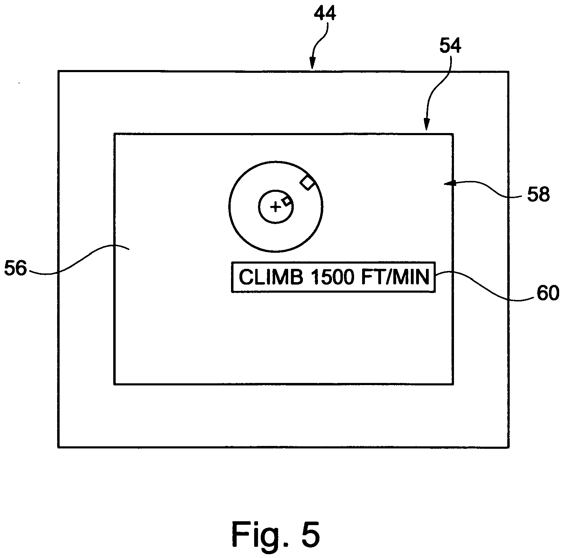

In Fig. 5 ist in einem weiteren Ausführungsbeispiel gezeigt, dass die Kontrollstation 44 eine Mensch/Maschine-Schnittstelle 54 aufweisen kann, die mit einer Anzeige 56 versehen ist, wobei auf der Anzeige 56 Kollisionsvermeidungsdaten 58 anzeigbar sind, wobei die Kollisionsvermeidungsdaten 58 auch Steuerbefehle 60 für das Ausweichmanöver aufweisen, die als Text darstellbar sind.

Beispielsweise weisen die Steuerbefehle 60 Vorgaben zu einer Steigrate/Sinkrate und/oder einer Kursänderung auf. Außerdem ist es auch möglich, zu den Steuerbefehlen 60 erlaubte Bereiche anzuzeigen.

Gemäß einem weiteren, nicht gezeigten Beispiel ist es möglich, dass die Kollisionsvermeidungsdaten verschiedene Hinweisstufen und/oder Wamstufen aufweisen, wobei die Hinweisstufen und/oder Warnstufen durch eine grafische Hinterlegung der Steuerbefehle angezeigt werden.

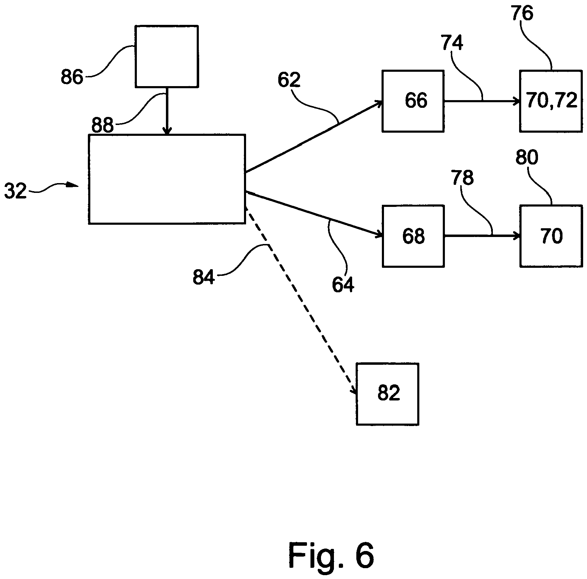

Gemäß einem weiteren Aspekt der Erfindung weist das Kollisionswarnsystem 32 mindestens zwei Betriebsmodi auf, die automatisch aktivierbar sind. Dies soll anhand von Fig. 6 erläutert werden. Das Kollisionswarnsystem 32 ist schematisch mit einer Box dargestellt. Mit zwei seitlichen Pfeilen 62, 64 ist angedeutet, dass das Kollisionswarnsystem 32 einen ersten Modus 66 und einen zweiten Modus 68 einnehmen kann. Beispielsweise werden in dem ersten Modus 66 im Fall einer ermittelten Kollisionssituation Kollisionswarnungen 70 und Ausweichempfehlungen 72 erzeugt und ausgegeben, was mit einem weiteren Pfeil 74 gezeigt ist, der auf eine Box 76 gerichtet ist. Beispielsweise können in dem zweiten Modus 68 im Fall einer ermittelten Kollisionssituation nur Kollisionswarnungen 70 erzeugt und ausgegeben werden, was mit einem zweiten horizontalen Pfeil 78 dargestellt ist, der in eine Box 80 mündet. Die Kollisionswarnungen 70 können beispielsweise Verkehrswarnungen enthalten. Außerdem kann ein dritter Modus 82 vorgesehen sein, bei dem im Falle einer ermittelten Kollisionssituation keine Kollisionswarnungen oder Ausweichempfehlungen ausgegeben werden. Dazu ist ein dritter Pfeil 84 vorgesehen.

Gemäß einem weiteren Aspekt der Erfindung, der ebenfalls im Zusammenhang mit Fig. 6 gezeigt ist, der jedoch nicht zwingend notwendig ist, sind die Betriebsmodi, beispielsweise die drei Modi 66, 68, 82, anhand von Betriebsparametern des Luftfahrzeugs und/oder anhand von Flugdaten automatisch aktivierbar, wozu in Fig. 6 eine weitere Box 86 dargestellt ist, von der aus ein weiterer Pfeil 88 in Richtung des Kollisionswarnsystems 32 verläuft, wodurch der Parameter- bzw. Dateneingang in das System dargestellt werden soll. Die Flugdaten können beispielsweise die Auslösung eines Signals durch Überfliegen bestimmter Wegpunkte umfassen.

Beispielsweise kann bei Ausfahren eines Fahrwerks ein Betriebsmodus aktiviert werden, in dem Ausweichmanöver unterbunden sind, was nicht näher dargestellt ist. Beispielsweise kann bei Ausfahren des Fahrwerks auch ein Betriebsmodus aktiviert werden, in dem nur Kollisionswarnungen erzeugt und ausgegeben werden. Gemäß einem weiteren Beispiel kann bei Ausfahren des Fahrwerks ein Betriebsmodus aktiviert werden, in dem weder Kollisionswarnungen noch Ausweichempfehlungen erzeugt und ausgegeben werden. Außerdem ist es möglich, bei einem Fehler in dem Aktuatoriksystem und/oder dem Auftriebs- und Vortriebssystem, zum Beispiel bei einem Triebwerksfehler, einen Betriebsmodus zu aktivieren, in dem Ausweichmanöver unterbunden sind, oder einen Betriebsmodus, in dem nur Kollisionswarnungen erzeugt und ausgegeben werden, oder ein Betriebsmodus, in dem weder Kollisionswarnungen noch Ausweichempfehlungen erzeugt und ausgegeben werden.

Wie bereits erwähnt, können die Kollisionsvermeidungsdaten, beispielsweise die Ausweichempfehlungen 72, Anweisungen für ein Ausweichmanöver umfassen, die sich auf die Steigrate/Sinkrate des unbemannten Flugzeugs bzw. unbemannten Luftfahrzeugs beziehen. Beispielsweise ist es auch möglich, dass sich die Kollisionsvermeidungsdaten mit den Anweisungen für ein Ausweichmanöver auf eine Kursänderung des Luftfahrzeugs beziehen. Selbstverständlich können die Anweisungen auch beide Aspekte umfassen.

Gemäß einem weiteren Aspekt der Erfindung ist vorgesehen, dass bei einem Aktivieren eines festgelegten Betriebsmodus das Ausführen eines Ausweichmanövers vorübergehend unterbindbar ist. Beispielsweise kann dies für den dritten Betriebsmodus 82 festgelegt sein. Darüber hinaus ist es auch möglich, den gezeigten Betriebsmodi einen weiteren Betriebsmodus zu überlagern, d.h., eine entsprechend Ausgabe von entweder Kollisionswarnungen und Ausweichempfehlungen, wie im ersten Modus 66, oder der Ausgabe von nur Kollisionswarnungen, wie im zweiten Modus 68, und gleichzeitig vorzusehen, dass das Autopilotsystem bzw. die Autopiloteinrichtung 30 kein Ausweichmanöver ausführt bzw. im Falle eines bereits im Ausführen befindlichen Ausweichmanövers dieses unterbricht bzw. abbricht.

Die Änderung des Betriebsmodus des Kollisionswarnsystems erfolgt beispielsweise bordautonom, basierend auf Zustandsinformationen des unbemannten Luftfahrzeugs, zum Beispiel dem Flugplan des unbemannten Luftfahrzeugs.

Die automatische Änderung des Betriebsmodus des Kollisionswarnsystems kann beispielsweise durch das Flugkontrollsystem erfolgen durch vorprogrammierte und im Flugplan des unbemannten Luftfahrzeugs gespeicherte Triggerpunkte, zum Beispiel Aktivierung durch Wegpunkteigenschaften, die im Rahmen der Missionsplanung von Operateur des unbemannten Luftfahrzeugs definiert wurden. Eine weitere Möglichkeit besteht auch darin, dass der Betriebsmodus aufgrund von Änderung der Flugphasen des Flugkontrollsystems des unbemannten Luftfahrzeugs bewirkt wird, zum Beispiel bei Take-off oder im Landeanflug.

Meldet das Kollisionswarnsystem beispielsweise eine Ausweichempfehlung an die Flugkontrolleinheit, so wird dies im Flugmanagement des Flugkontrollsystems auf Konsistenz überprüft. Ist im Flugmanagement die Durchführung des angeforderten Ausweichmanövers aktiviert, so kommandiert sie die vom Kollisionswarnsystem angeforderte Steigrate/Sinkrate und/oder Kursänderung an die Flugführungsfunktion zusammen mit der Aufforderung, diese in den entsprechenden Modus zur Umsetzung einer Steig- oder Sinkratenvorgabe bzw. Kursänderung zu schalten.

Meldet das Kollisionswarnsystem beispielsweise "clear of conflict" oder kommandiert der Operateur des unbemannten Luftfahrzeugs den Abbruch des Ausweichmanövers, so kommandiert das Flugmanagement der Flugführung, wieder den Standardmodus zu aktivieren.

Erhält die Flugführungsfunktion ein Steigraten-/Sinkratenkommando, so schaltet die longitudinale Führungsfunktion in einen entsprechenden Modus um. Die laterale Führung des unbemannten Luftfahrzeugs muss dabei nicht tangiert werden und folgt weiter dem durch Wegpunkte vorgegebenen Flugpfad, es sei denn, die Flugführungsfunktion erhält auch ein Kursänderungskommando. Wird der Standardführungsmodus aktiviert, folgt die Flugführung dem durch Wegpunkte vorgegebenen Flugpfad. Wurde durch ein vorangegangenes Ausweichmanöver ein Höhenunterschied zwischen Vorgabe und tatsächlicher Position des unbemannten Luftfahrzeugs aufgebaut, so wird das unbemannte Luftfahrzeug zurück auf die Vorgabehöhe geführt.

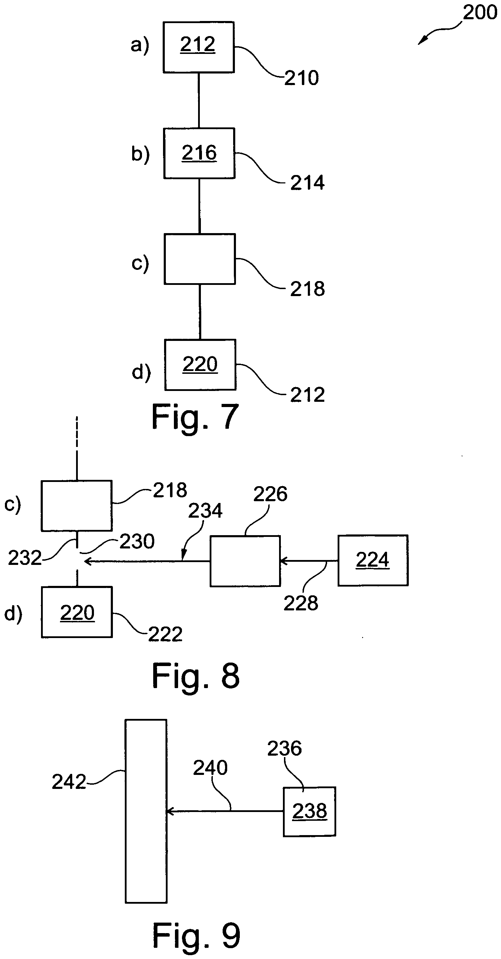

In Fig. 7 sind schematisch die wesentlichen Schritte eines erfindungsgemäßen Verfahrens 200 zur Kollisionsvermeidung beim Fliegen eines unbemannten Luftfahrzeugs dargestellt. Das Verfahren 200 umfasst die folgenden Schritte: In einem Erfassungsschritt 210 wird eine Kollisionssituation 212 mit einem Kollisionswarnsystem des unbemannten Luftfahrzeugs erfasst. Anschließend ist ein Erzeugen 214 von Kollisionsvermeidungsdaten 216 durch das Kollisionswarnsystem vorgesehen. Danach erfolgt ein Zuführen 218 der Kollisionsvermeidungsdaten an eine Autopiloteinrichtung des unbemannten Luftfahrzeugs. Schließlich wird ein Ausweichmanöver 220 durch die Autopiloteinrichtung veranlasst 222.

Damit ist ein unbemanntes Luftfahrzeug in der Lage, im Falle einer bevorstehenden Kollision diese Kollisionssituation 212 zu erfassen und durch Ausführen des Ausweichmanövers 220 durch eine Autopiloteinrichtung an Bord des unbemannten Luftfahrzeugs eine Kollision zu verhindern.

Gemäß einem weiteren Ausführungsbeispiel der Erfindung ist vorgesehen, dass ein Unterbindungssignal 224, wie in Fig. 7 dargestellt, einer Unterbindungsvorrichtung 226 zugeführt wird, was mit einem Pfeil 228 dargestellt ist. Die Unterbindungsvorrichtung 226 bewirkt, dass ein Ausweichmanöver 220 zumindest vorübergehend unterbunden wird, wobei in Fig. 8 die Unterbindung durch eine Unterbrechung 230 einer Verbindungslinie 232 zwischen dem Kasten 218 und dem Kasten 222 angedeutet ist. Das Bewirken der zumindest vorübergehenden Unterbindung ist schematisch mit einem Pfeil 234 gezeigt, der von der Unterbindungsvorrichtung 226 in Richtung der Verbindungslinie bzw. der unterbrochenen Verbindungslinie 232 gerichtet ist.

An dieser Stelle sei darauf hingewiesen, dass die Wirkung der Unterbindungsvorrichtung auch an anderer Stelle des Verfahrens vorgesehen sein kann. Beispielsweise kann bereits ein Einwirken auf das Kollisionswarnsystem das Erzeugen von Kollisionsvermeidungsdaten unterbinden, so dass es auch nicht zu der Ausführung eines Ausweichmanövers kommen kann. Jedenfalls bewirkt das Unterbindungssignal, dass gemäß einem Beispiel die Verbindung des Kollisionswarnsystems mit der Autopiloteinrichtung temporär unterbrochen wird, beispielsweise durch Unterbrechung eines Datenstroms sowie auch beispielsweise durch tatsächlich physikalische Unterbrechung der Verbindungsleitung, wie dies bereits oberhalb angedeutet worden ist.

Gemäß einem weiteren Aspekt der Erfindung ist ein Verfahren vorgesehen, das in Fig. 9 gezeigt ist, bei dem das Unterbindungssignal von einer Kontrollstation 236 zur Führung und Überwachung des Fluges des unbemannten Luftfahrzeugs erzeugt wird, was durch Bezugszeichen 238 angedeutet ist, und über eine Datenverbindung 240 dem unbemannten Luftfahrzeug, in Fig. 9 schematisch durch einen Kasten 242 dargestellt, zugeführt wird.

Gemäß einem Aspekt der Erfindung ist es also möglich, das in Fig. 8 dargestellte Erzeugen eines Unterbindungssignals 224 an Bord des unbemannten Luftfahrzeugs vorzusehen. Gemäß dem in Fig. 9 schematisch gezeigten Ausführungsbeispiel der Erfindung ist vorgesehen, dass ein Verbindungssignal außerhalb des unbemannten Luftfahrzeugs erzeugt wird, beispielsweise mittels einer Kontrollstation 236, und dem unbemannten Luftfahrzeug 242 über die Datenverbindung 240 zugeführt wird.

Die Kontrollstation kann sich beispielsweise auf der Erde befinden oder aber auch innerhalb eines separaten Luftfahrzeugs in der Luft. Es sei darauf hingewiesen, dass die Kontrollstation sowohl fest installiert als auch stationär, d.h. mobil, vorgesehen sein kann. Außerdem ist gemäß der Erfindung ein Ausführungsbeispiel vorgesehen, bei dem sich die Kontrollstation an Bord eines Wasserfahrzeugs befindet, beispielsweise eines Schiffes oder eines U-Boots, oder auch an Bord einer mobilen oder fest installierten schwimmenden Plattform, was ebenfalls für auf dem Meeresgrund verankerte bzw. aufgeständerte Plattformen über Wasser und auch Kontrollstationen unter Wasser gilt.

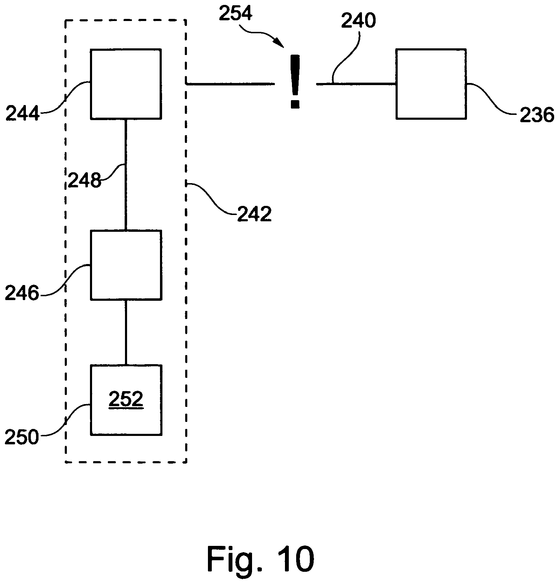

Gemäß einem weiteren Ausführungsbeispiel der Erfindung, in Fig. 10 gezeigt, ist ein Verfahren vorgesehen, bei dem bei Ausfall der Datenverbindung 240 zwischen der Kontrollstation 236 und dem unbemannten Luftfahrzeug 242 das Kollisionswarnsystem mit der Autopiloteinrichtung automatisch verbunden wird und im Falle einer erfassten Kollisionssituation und erzeugter Kollisionsvermeidungsdaten die Autopiloteinrichtung automatisch ein Ausweichmanöver durchführt. Dazu ist in Fig. 10 das unbemannte Luftfahrzeug 242 in einem gestrichelten äußeren Rahmen gezeigt, innerhalb dessen eine erste Box 244 das Kollisionswarnsystem darstellt und eine zweite Box 246 die Autopiloteinrichtung. Die automatische Verbindung ist mit einer Verbindungslinie 248 zwischen dem Kollisionswarnsystem 244 und der Autopiloteinrichtung 246 dargestellt. Eine weitere Box 250 soll das Durchführen eines Ausweichmanövers darstellen, wobei das Ausweichmanöver innerhalb der weiteren Box 250 durch Bezugsziffer 252 dargestellt ist. Die Unterbrechung, d.h. der Ausfall der Datenverbindung 240 ist symbolhaft mit einem Ausrufungszeichen 254 angedeutet, mit dem die Verbindungslinie 240 zwischen der Kontrollstation 236 und dem Luftfahrzeug 242 deutlich sichtbar unterbrochen ist.

Selbstverständlich kann es sich bei einem Ausfall 254 der Datenverbindung 240 um einen Komplettausfall einer, beispielsweise, Funkverbindung handeln, sowie auch um eine gestörte, jedoch weiterhin aufrechterhaltene Funkverbindung. Gemäß dem in Fig. 10 gezeigten beispielhaften Verfahren ist sichergestellt, dass das unbemannte Luftfahrzeug 242 aufgrund des vorgesehenen automatischen Ausführens des Ausweichmanövers auch dann eine Kollision vermeidet, wenn von der Kontrollstation aus kein Zugriff mehr möglich ist, da die Datenverbindung abgerissen bzw. unterbrochen ist. Es ist daher möglich, von der Kontrollstation aus manuell auf das Ausführen eines Ausweichmanövers einzuwirken, beispielsweise dies zu unterbinden oder auch manuell anders auszuführen, ohne bei einem Abriss der Datenverbindung die Gefahr einer Kollision zu riskieren, da in einem solchen Fall automatisch ein Ausweichmanöver durchgeführt wird.

Mit Bezug auf Fig. 10 sei erwähnt, dass die gezeigte Verbindung 248 des Kollisionswarnsystems 244 mit der Autopiloteinrichtung 246 eine Datenverbindung darstellt, die entweder direkt zwischen den beiden Komponenten bzw. Einheiten vorgesehen sein kann oder auch indirekt mittels der bereits in Fig. 1 dargestellten Zusammenhänge des Flugkontrollsystems.

Wie bereits oberhalb erwähnt, kann ein Verfahren vorgesehen sein, bei dem die Autopiloteinrichtung das unbemannte Luftfahrzeug bei Abschluss eines Ausweichmanövers wieder der vorgegebenen Wegführung und/oder dem vorgegebenen Ziel zuführt.

Die oberhalb beschriebene Möglichkeit, seitens eines Operateurs bzw. Bedieners über die Kontrollstation auf die automatische Ausführung eines Ausweichmanövers eingreifen zu können, kann gemäß der Erfindung auch als Opt-Out-Logik bezeichnet werden. Das automatische Zurückschalten auf den Autopiloten bzw. bei vorgesehenen Ausweichmanövern das Veranlassen der Ausweichmanöver bei unterbrochener Datenleitung stellt sicher, dass das unbemannte Luftfahrzeug gemäß der Erfindung stets in der Lage ist, eine Kollision mit anderen, Transponder tragenden Objekten, beispielsweise anderen Luftfahrzeugen, zu vermeiden. Damit wird beispielsweise der Betrieb von unbemannten Luftfahrzeugen in den Luftraumklassen A, B und C sowie D mit speziellen Prozeduren möglich. An dieser Stelle sei darauf hingewiesen, dass die Opt-Out-Logik für den letztgenannten Aspekt keine unmittelbare Voraussetzung ist, sondern lediglich eine weitere Kontrollmöglichkeit darstellt.

In Fig. 11 ist schematisch ein unbemanntes Luftfahrzeug 110 gemäß der Erfindung dargestellt. Außerdem ist schematisch ein Flugzeug 111 gezeigt, das sich in Richtung auf das unbemannte Luftfahrzeug 110 bewegt. Um das unbemannte Luftfahrzeug 110 sind Schutzzonen über die Zeitabstände bis zur Kollision definiert. Die Zeitabstände sind im unteren Bereich mit Entfernungspfeilen 113 schematisch dargestellt.

Beispielsweise ist eine erste größere Schutzzone 115 um das unbemannte Luftfahrzeug 110 gezeigt für einen Abstand von 20 nautischen Meilen (NM), sowie eine zweite Schutzzone 117 von 3,3 NM und eine dritte Schutzzone 119 von 2,1 NM. Es sei darauf hingewiesen, dass die genannten Werte als beispielhafte Schwellenwerte aufgeführt sind, die durch ein System wie das TCAS vorgegeben sein können.

Beispielsweise wird innerhalb der zweiten Schutzzone 117 nur eine Kollisionswarnung erzeugt und zur Verfügung gestellt, die in Fig. 11 mit den Buchstaben TA für "Traffic Advisory" dargestellt ist.

In der dritten Schutzzone 119 wird eine Ausweichempfehlung erzeugt und ausgegeben, dargestellt durch die Buchstaben RA für "Resolution Advisory". In Fig. 11 ist im unteren Bereich die oberhalb dargestellte Situation in einem schematischen Vertikalschnitt gezeigt in Ergänzung zu der oberhalb dargestellten horizontalen Aufsicht. Wie erkennbar ist, bewegen sich das unbemannte Luftfahrzeug 110 sowie das Flugzeug 111 aufeinander zu, so dass eine Kollisionsgefahr droht. Die Schutzzonen umfassen dabei eine Region unterhalb und oberhalb der Flughöhe des Flugzeugs, welche mit einer horizontalen Linie 121 angedeutet ist.

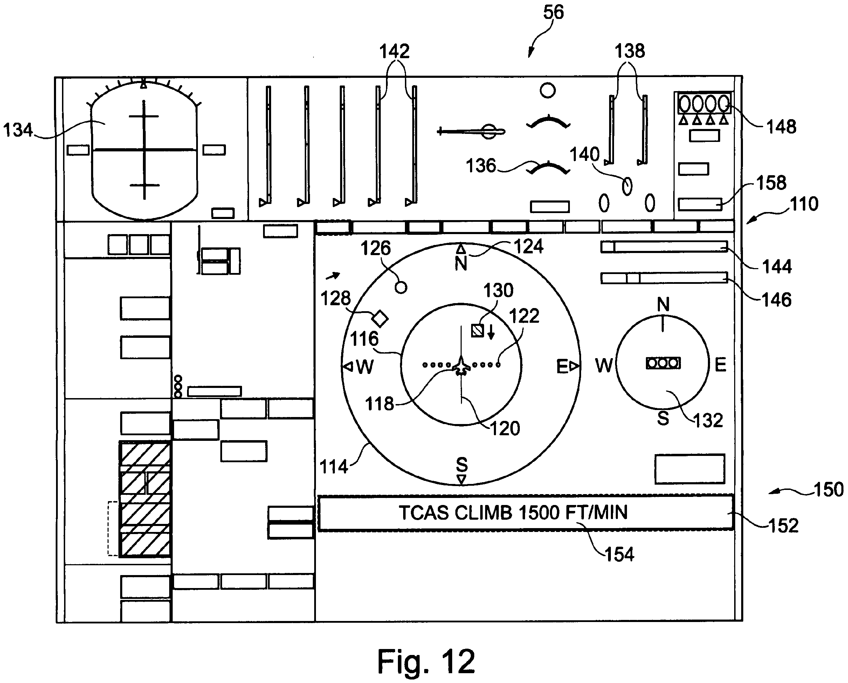

In Fig. 12 ist ein Ausschnitt der bereits erwähnten Eingabeeinrichtung 46 dargestellt, die in der Kontrollstation vorgesehen ist, um den Flug des unbemannten Luftfahrzeugs zu überwachen und auch zu führen. Gezeigt ist ein Ausführungsbeispiel für die bereits erwähnte Anzeige 56 der Mensch/Maschine-Schnittstelle, auch als Human Machine Interface (HMI) bezeichnet. In Fig. 12 ist die Anzeige 56 in Form eines Bildschirms 110 gezeigt, auf dem sich in relativ zentraler Position ein erster Bereich 112 befindet, auf dem sich in der Mitte von zwei konzentrischen Kreisen 114 und 116 ein Symbol 118 für das unbemannte Luftfahrzeug befindet. Die Kreise dienen zur Abschätzung der Entfernung durch den Piloten und werden auch als Range-Ringe bezeichnet. Das unbemannte Luftfahrzeug 118 ist in seiner Flugrichtung mit einer Flugrichtungslinie 120 versehen und einer quer dazu verlaufenden, gepunktet dargestellten Linie 122. Innerhalb des äußeren Kreises 114 der beiden konzentrischen Kreise sind außerdem noch Himmelsrichtungsangaben 124 vorgesehen.

Die umgebenden Flugzeuge ("Intruder" in der TCAS-Sprache) sind in Relation zu Range-Ringen dargestellt, beispielsweise mittels eines Symbols in Form eines Kreises 126, eines auf der Spitze stehenden Quadrats 128 oder eines ausgefüllten Quadrats 130. Die Symbolik kann beispielsweise vom TCAS übernommen werden.

Auf die weiteren zusätzlichen Angaben soll nicht detailliert eingegangen werden, die auf der Anzeige 110 dargestellt sind.

Es sei lediglich erwähnt, dass beispielsweise rechts von dem Kollisionswarnbereich ein Kompass 132 abgebildet ist sowie ein im linken oberen Eck befindlicher Bereich mit einem künstlichen Horizont 134.

Des weiteren finden sich Angaben wie beispielsweise eine Tankzustandsanzeige 136, eine Hydraulikzustandsanzeige 138, eine Fahrwerkzustandsanzeige 140 sowie unter anderem auch eine Ölzustandsanzeige 142 mit Öltemperatur und Öldruck. Außerdem sind in der Nähe des Kompasses oberhalb von diesem eine Höhenmessangabe 144 sowie eine Geschwindigkeitsanzeige 146 abgebildet. Im oberen rechten Eck befindet sich schließlich noch ein Feld zum Einstellen einer Transponderkennung 148. Die zusätzlichen Inhalte der Darstellung sind nur beispielhaft zu verstehen. Dies hat keinen Einfluss auf die Darstellung des Kollisionswarnsystems und kann als unabhängig dazu eingestuft werden.

Erfindungsgemäß ist weiter vorgesehen, dass im Falle einer ermittelten Kollisionssituation die Kollisionsvermeidungsdaten in Form einer Ausweichempfehlung dargestellt werden. Dazu ist unterhalb des mittleren Bereichs 112 mit den verschiedenen Schutzzonen und dem in der Mitte befindlichen unbemannten Luftfahrzeug 118 ein Kollisionsinformationsübertragungsbereich 150 vorgesehen, der beispielsweise als deutlich zu erkennender quer verlaufender Balkenbereich 152 ausgebildet sein kann. Die Kollisionsvermeidungsdaten können, wie bereits erwähnt, Steuerbefehle für das Ausweichmanöver aufweisen, die als Text 154 darstellbar sind.

Beispielsweise ist in Fig. 12 eine Anweisung "TCAS Climb 1500 ft/min" dargestellt, um einem Operateur, der sich in der Kontrollstation befindet, zu ermöglichen, diese Information bzw. Angabe zunächst wahrzunehmen.

Bei einer bestehenden Datenverbindung zu dem unbemannten Luftfahrzeug kann der Operateur nun einen entsprechenden Steuerbefehl über die Eingabefelder der als Bildschirm dargestellten Schnittstelle eingeben. Da erfindungsgemäß vorgesehen ist, dass es außer im Fall eines vom Operateur deaktivierten Autopiloten-Ausweichmanöverbetriebs stets automatisch zu einer Ausführung eines Ausweichmanövers durch den Autopiloten kommt, erhält der Operateur diejenigen Angaben, die das Autopilotensystem an Bord des unbemannten Luftfahrzeugs ausführt.

Gemäß einem Aspekt ist eine manuelle Eingabe von Steuerbefehlen nicht vorgesehen. Die Anzeige der TCAS-Wamungen dient zur Information des Operateurs, d.h. dessen Situationsbewusstsein, der ansonsten ein (von ihm unkommandiertes) Steigen oder Sinken seines unbemannten Luftfahrzeugs als Fehlfunktion des Autopiloten missverstehen könnte. Des weiteren kann der Operateur, wenn er es für nötig hält, das Ausweichmanöver abbrechen.

Beispielsweise kann die balkenförmige Darstellung 152 mit einer Farbe, beispielsweise rot, hinterlegt sein, um damit auf die zweite Wam- bzw. Hinweisstufe hinzuweisen, in der es im Falle eines aktivierten bzw. nicht deaktivierten Autopiloten zu der Ausführung eines Ausweichmanövers kommt.

Wenn beispielsweise keine kritische Situation bevorsteht, d.h. das Kollisionswarnsystem keine Kollisionssituation ermittelt hat, kann als zusätzliche Option vorgesehen sein, dass die Anzeige in Form des Balkens beispielsweise grün zu hinterlegen und ohne Text bzw. evtl. mit dem Text, dass keine Warnsituation vorliegt. Im Falle eines erfolgreich durchgeführten Ausweichmanövers, d.h. "clear of conflict", kann die Balkendarstellung 152 grün hinterlegt sein, was jedoch nicht näher gezeigt ist.

Im Zusammenhang mit der sogenannten "Dark and Silent Cockpit" Philosophie, bei der lediglich Abweichungen vom Sollzustand gesondert angezeigt werden, kann vorgesehen sein, dass auf eine gesonderte Anzeige, dass kein Konflikt vorliegt, verzichtet wird; die für die Anzeige der Warnungen vorgesehene Fläche bleibt in diesem Fall einfach schwarz/dunkel, d.h. es erfolgt keine Anzeige.

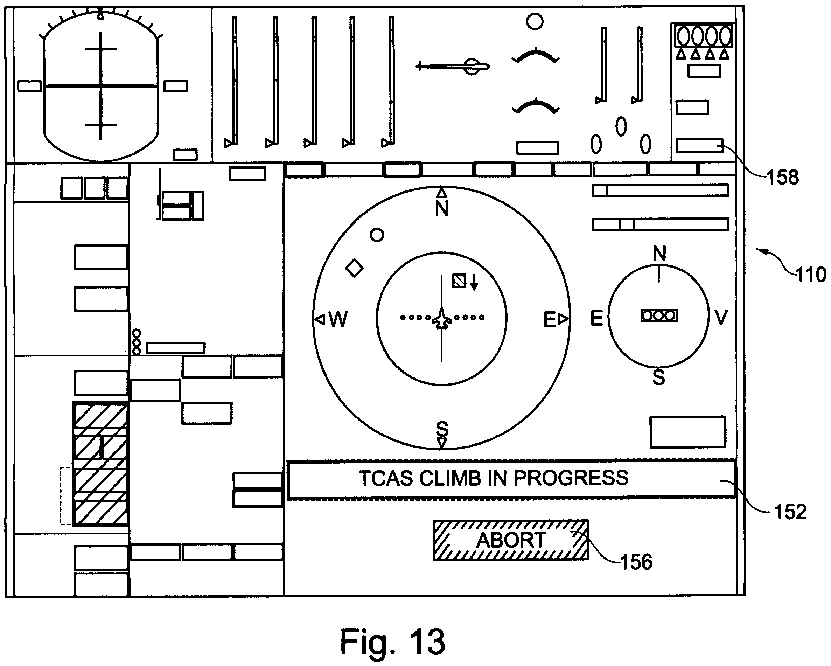

Wie bereits erwähnt, können im Zusammenhang mit der in Fig. 12 und auch Fig. 13 dargestellten Textanzeige des jeweiligen Ausweichmanövers auch die entsprechend erlaubten Bereiche ergänzend dargestellt werden, was dazu führt, dass alle zur Beurteilung des Ausweichmanövers notwendigen Informationen integriert visuell und textuell dargestellt sind.

In Fig. 13 ist eine weitere Ausführungsform der Anzeige 110 aus Fig. 12 gezeigt, weshalb gleiche Darstellung nicht erneut mit einem Bezugszeichen versehen sind. Der Balken 152 ist in diesem Fall ebenfalls rot hinterlegt und weist jedoch eine andere Textinformation auf, nämlich die Information, dass sich das unbemannte Luftfahrzeug in einem Aufstiegsvorgang befindet, was durch die Angabe "TCAS Climb in Progress" dargestellt ist.

Bei einer bestehenden Datenverbindung zwischen der Kontrollstation und dem unbemannten Luftfahrzeug besteht nun außerdem die Möglichkeit, ein nicht weiter gezeigtes Signal zu erzeugen, das jedoch oberhalb bereits mehrfach erwähnt wurde, das mittels der Datenverbindung dem unbemannten Luftfahrzeug zugeführt werden kann, um eine zumindest vorübergehende Unterbindung des Ausführens eines Ausweichmanövers zu bewirken.

Dies kann beispielsweise durch einen mit dem Begriff "ABORT" versehenen Feld 156 erfolgen, der beispielsweise mittels eines Mausklicks aktiviert werden kann, um das in Ausführung befindliche Ausweichmanöver, nämlich den Steigvorgang abzubrechen. Der Abbruchknopf bzw. das Abbruchfeld 156 erlaubt einen expliziten Abbruch des Ausweichmanövers. Kommt es durch ein Zurückschalten bzw. Aktivieren eines sozusagen niedrigeren Betriebsmodus des Kollisionswarnsystems, so dass keine Ausweichempfehlungen mehr generiert werden, wird die Funktion des automatischen Ausweichens dadurch auch deaktiviert, d.h. dies stellt einen impliziten Abbruch des Ausweichmanövers dar.

Wie bereits erwähnt, ist erfindungsgemäß außerdem vorgesehen, dass es bei einer Unterbrechung der Datenverbindung zwischen der Kontrollstation und dem unbemannten Luftfahrzeug automatisch dazu kommt, dass an Bord des unbemannten Luftfahrzeugs der Autopilot wieder mit dem Ausweichmanöver beginnt, sollte dies noch erforderlich sein. Damit ist gewährleistet, dass ein Operateur über die Kontrollstation zwar in das Geschehen, d.h. die Steuerung, an Bord des unbemannten Luftfahrzeugs übersteuemd eingreifen kann, indem er beispielsweise den Ausweichvorgang unterbricht, jedoch dann, wenn der Operateur keine Kontrolle über das unbemannte Luftfahrzeug hat, nämlich wenn die Datenverbindung abgerissen oder unterbrochen ist oder auch nur unvollständige Datenübermittlung erlaubt, das unbemannte Luftfahrzeug wieder in einen sicheren Modus zurückgeführt werden kann, nämlich das automatische Ausführen von Ausweichmanövern durch den Autopiloten.

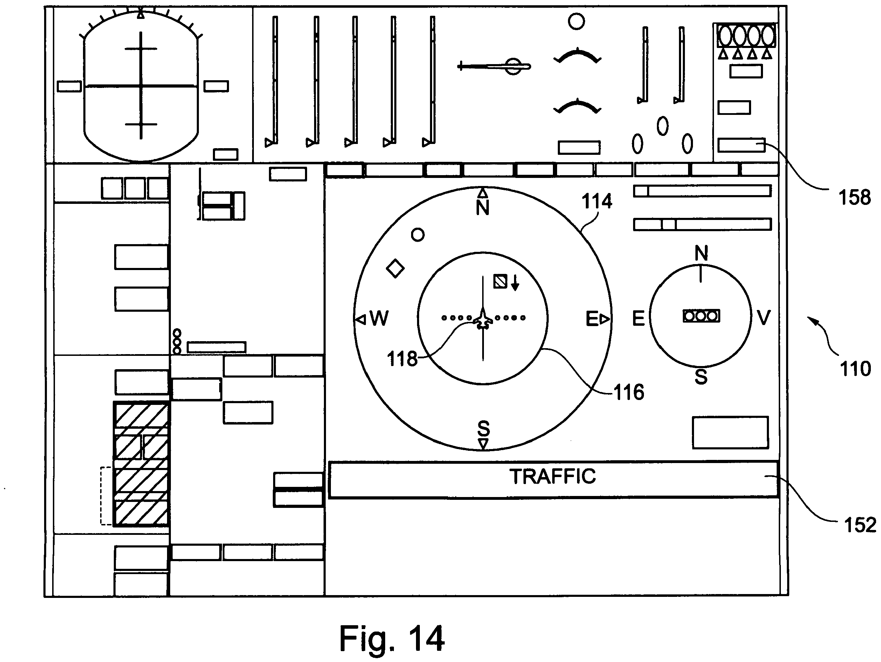

In Fig. 14 ist ein weiterer Aspekt der Anzeige 110 dargestellt. Der balkenförmige Bereich 152 ist beispielsweise in einem Orangeton gezeigt, der sich deutlich von dem Rot der Darstellungen in Fig. 12 und Fig. 13 unterscheidet. Als Textinformation ist das Wort "Traffic" dargestellt, was auf eine Kollisionssituation hinweist, jedoch nur eine Kollisionswarnung darstellt und keine Ausweichempfehlung, wie dies in den Darstellungen in Fig. 12 und 13 der Fall ist.

Obwohl innerhalb des inneren Schutzbereichs 116 ein Luftfahrzeug von dem Kollisionswarnsystem ermittelt worden ist, wird nur eine Kollisionswarnung angegeben, da sich das Kollisionswarnsystem in einem Betriebsmodus befindet, in dem nur Kollisionswarnungen ausgegeben werden. Dies ist mit einer Anzeige 158 im rechten oberen Bereich des Displays 110 dargestellt, in dem sich die Information "TA only" befindet, was darauf hinweist, dass nur Kollisionswarnungen dargestellt sind. Demgegenüber ist in Fig. 12 und Fig. 13 die Anzeigevorrichtung 158 für den Betriebsmodus des Kollisionswarnsystems auf den Modus TA/RA eingestellt, d.h., es werden Kollisionswarnungen und, soweit erforderlich, auch Ausweichempfehlungen dargestellt.

Wie bereits erwähnt, kann der Operateur mittels der aktivierbaren Anzeige 110 den Betriebsmodus über die Anzeigevorrichtung, die gleichzeitig auch als Steuerungsvorrichtung dient, einstellen, sofern eine Datenverbindung mit dem unbemannten Luftfahrzeug besteht.

Beispielsweise erfolgt ein automatisches Umstellen auf die sichere Betriebsweise des Kollisionswarnsystems, d.h. auf die Ausgabe von Kollisionswarnungen und Ausweichempfehlungen und auch einer anschließenden Kopplung des Autopiloten-Systems zur Ausführung eines Ausweichmanövers, so dass dieses bei Abbruch der Datenverbindung wieder aktiviert wird, um einen stets sicheren Flugbetrieb des unbemannten Luftfahrzeugs zu gewährleisten.

Darüber hinaus ist es aber auch möglich, dass das unbemannte Luftfahrzeug selbst mit einer entsprechenden Dateneingabevorrichtung versehen ist, um anhand von Betriebsparametern des Luftfahrzeugs, d.h. des unbemannten Luftfahrzeugs, und/oder anhand von Flugdaten die Betriebsmodi automatisch zu aktivieren. Im Falle einer bestehenden Datenverbindung wird dann diese Information an die Kontrollstation übermittelt und dort die Anzeige 158 entsprechend vorgenommen.

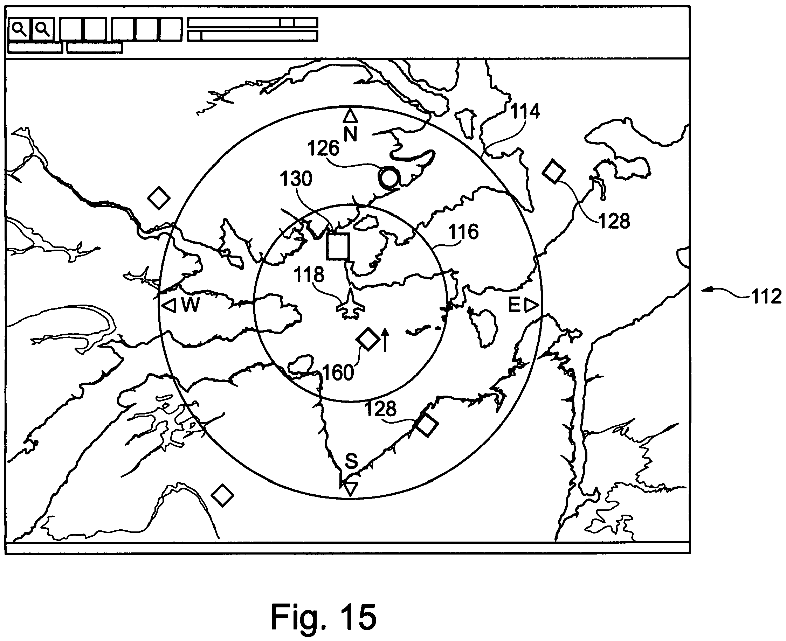

Gemäß einem weiteren Aspekt der Erfindung kann vorgesehen sein, die Kollisionswarninformation zusammen mit dem Symbol für das unbemannte Luftfahrzeug 118 auch mit einer Kartendarstellung zu hinterlegen, wie dies in Fig. 15 beispielhaft dargestellt ist. Ein zentraler Aspekt der Kombination mit einer (topographischen) Kartendarstellung ist, dass mögliche Konflikte mit dem umgebenden Gelände - die als Folge einer lateralen oder vertikalen Ausweichempfehlung des Kollisionswarnsystems insbesondere in gebirgigen Regionen auftreten können - proaktiv erkannt werden können. Bei einem unbemannten Luftfahrzeug gemäß der Erfindung stellt dies eine Möglichkeit zur Erkennung und Beurteilung solcher Konflikte dar, wenn z.B. die tatsächlich verfügbare Bandbreite des Datenlinks keine Übertragung von Video in Echtzeit zulässt. Auch in dieser Darstellung ist eine ähnliche Symbolik verwendet, in diesem Fall ergänzt um ein auf der Spitze stehendes ausgefülltes Quadrat 160.

Die oberhalb beschriebenen Ausführungsbeispiele können in unterschiedlicher Art und Weise kombiniert werden. Insbesondere können auch Aspekte der Vorrichtungen für Ausführungsformen des Verfahrens sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele und Aspekte beschrieben worden sind, auch in Kombination mit anderen Merkmalen oder Schritten anderer oben beschriebener Ausführungsbeispiele und Aspekte verwendet werden können. Bezugszeichen in den Ansprüchen sind nicht als Einschränkung anzusehen.

## Patentansprüche

1. Unbemanntes Luftfahrzeug (10), aufweisend
- ein Auftriebs- und Vortriebssystem (12); und
- ein Flugkontrollsystem (22) mit:
- einer Flugkontrolleinheit (24);
- einem Navigationssystem (26); und
- einem Aktuatoriksystem (28);
wobei die Flugkontrolleinheit eine Autopiloteinrichtung (30) aufweist;
wobei die Flugkontrolleinheit vorgesehen ist, anhand von Daten aus dem Navigationssystem und/oder der Autopiloteinrichtung Steuerkommandos zu berechnen, die dem Aktuatoriksystem zuführbar sind zur Ansteuerung des Auftriebs-und Vortriebssystems;
wobei ein Kollisionswarnsystem (32) vorgesehen ist, das mit dem Flugkontrollsystem verbunden ist; wobei das Kollisionswarnsystem eine Kollisionssituation erfasst und Kollisionsvermeidungsdaten (34) zur Verfügung stellt; und
wobei eine Verbindung (36) zwischen dem Kollisionswarnsystem und der Autopiloteinrichtung vorgesehen ist, um anhand der Kollisionsvermeidungsdaten durch die Autopiloteinrichtung ein Ausweichmanöver zu veranlassen.

2. Unbemanntes Luftfahrzeug nach Anspruch 1, wobei eine Datenverbindungseinrichtung (38) vorgesehen ist, zur Verbindung mit einer Kontrollstation zur Führung und Überwachung des Fluges des unbemannten Luftfahrzeugs; und
wobei die Datenverbindungseinrichtung mit einer Unterbindungsvorrichtung (40) versehen ist, mit der das Ausführen eines Ausweichmanövers zumindest vorübergehend unterbindbar ist.

3. Unbemanntes Luftfahrzeug nach Anspruch 1 oder 2, wobei das Kollisionswarnsystem (32) mindestens zwei Betriebsmodi (66, 68) aufweist; und wobei die Betriebsmodi anhand von Betriebsparametern des Luftfahrzeugs und/oder anhand von Flugdaten (86) automatisch aktivierbar sind.

4. Unbemanntes Luftfahrzeug nach Anspruch 2 oder 3, wobei bei Ausfall der Datenverbindung das Kollisionswarnsystem mit der Autopiloteinrichtung automatisch verbindbar ist; und wobei im Falle einer erfassten Kollisionssituation und erzeugter Kollisionsvermeidungsdaten mittels der Autopiloteinrichtung ein Ausweichmanöver automatisch durchführbar ist.

5. Unbemanntes Luftfahrtsystem (42), aufweisend
- wenigstens ein unbemanntes Luftfahrzeug (12) nach einem der vorhergehenden Ansprüche;
- wenigstens eine Kontrollstation (44) zur Führung und Überwachung des Fluges des wenigstens einen unbemannten Luftfahrzeugs; und
- eine Datenverbindung (38) zwischen der Kontrollstation und dem wenigstens einen unbemannten Luftfahrzeug;
wobei die Kontrollstation eine Eingabeeinrichtung (46) aufweist, mit der ein Signal (48) erzeugbar ist, das mittels der Datenverbindung dem unbemannten Luftfahrzeug zuführbar ist, um eine zumindest vorübergehende Unterbindung des Ausführens eines Ausweichmanövers zu bewirken.

6. Unbemanntes Luftfahrtsystem nach Anspruch 5, wobei die Kontrollstation eine Mensch-Maschine-Schnittstelle aufweist (54), die mit einer Anzeige (56) versehen ist; wobei auf der Anzeige die Kollisionsvermeidungsdaten (58) anzeigbar sind; wobei die Kollisionsvermeidungsdaten Steuerbefehle (60) für das Ausweichmanöver aufweisen, die als Text darstellbar sind.

7. Verfahren (200) zur Kollisionsvermeidung beim Fliegen eines unbemannten Luftfahrzeugs, umfassend die folgenden Schritte:
a) Erfassen (210) einer Kollisionssituation (212) mit einem Kollisionswarnsystem des unbemannten Luftfahrzeugs;
b) Erzeugen (214) von Kollisionsvermeidungsdaten (216) durch das Kollisionswarnsystem;
c) Zuführen (218) der Kollisionsvermeidungsdaten an eine Autopiloteinrichtung des unbemannten Luftfahrzeugs;
d) Veranlassen (222) eines Ausweichmanövers (220) durch die Autopiloteinrichtung.

8. Verfahren nach Anspruch 7, wobei ein Unterbindungssignal (224) einer Unterbindungsvorrichtung (226) zugeführt wird (228) und wenigstens ein Ausweichmanöver zumindest vorübergehend unterbunden wird (230).

9. Verfahren nach Anspruch 8, wobei das Unterbindungssignal von einer Kontrollstation zur Führung und Überwachung des Fluges des unbemannten Luftfahrzeugs erzeugt (238) und über eine Datenverbindung dem unbemannten Luftfahrzeug zugeführt wird (240).

10. Verfahren nach Anspruch 9, wobei bei Ausfall (254) der Datenverbindung das Kollisionswarnsystem mit der Autopiloteinrichtung automatisch verbunden wird (248) und im Falle einer erfassten Kollisionssituation und erzeugter Kollisionsvermeidungsdaten die Autopiloteinrichtung automatisch ein Ausweichmanöver (252) durchführt (250).
